# EUROPEAN PATENT APPLICATION

(11) **EP 4 443 534 A1**
(43) Date of publication of application: **09.10.2024**
(21) Application number: 22906202.1
(22) Date of filing: 24.11.2022
(51) Int. Cl.: H01M 4/13, H01M 10/0525

(54) **COMPOSITE ELECTRODE PLATE, AND PREPARATION METHOD THEREFOR AND APPLICATION THEREOF**

(30) Priority: 14.12.2021 CN 202111531226
(71) Applicant: Trina Storage Solutions (Jiangsu) Co., Ltd, Changzhou, Jiangsu 213031 (CN)
(72) Inventor: LU, Lin, hangzhou, Jiangsu 213031 (CN); LI, Qingling, hangzhou, Jiangsu 213031 (CN); JIANG, Zhiyi, hangzhou, Jiangsu 213031 (CN)
(74) Representative: Nederlandsch Octrooibureau
(86) International application number: PCT/CN2022/133942
(87) International publication number: WO 2023/109451

(57) **Abstract**

Provided in the present invention are a composite electrode plate, and a preparation method therefor and the application thereof. The composite electrode plate comprises a current collector, an active substance layer, and a contact resistance regulation and control layer, which is arranged between the current collector and the active substance layer, wherein the contact resistance regulation and control layer comprises a first contact resistance regulation and control layer, a second contact resistance regulation and control layer, a third contact resistance regulation and control layer, a fourth contact resistance regulation and control layer and a fifth contact resistance regulation and control layer, which are sequentially arranged in parallel; and the materials of the first contact resistance regulation and control layer, the third contact resistance regulation and control layer and the fifth contact resistance regulation and control layer are the same, and the materials of the second contact resistance regulation and control layer and the fourth contact resistance regulation and control layer are the same. In the present invention, the contact resistance between a current collector and an active substance coating is controlled to reduce or eliminate the phenomenon of the current density at an edge being large, such that the uniform reaction of a whole active substance layer is achieved, and the cycle life is prolonged.

## Description

### Technical Field

The invention belongs to the technical field of lithium ion batteries and relates to a composite electrode plate, and a preparation method therefor and the application thereof.

### Background

The gradual depletion of fossil energy and the increasingly serious greenhouse effect have prompted researchers to continuously explore sustainable and clean energy. Since lithium-ion batteries have advantages over traditional lead-acid batteries in terms of cycle life, volume energy density and mass energy density, many technicians have been committed to the commercialization of lithium-ion batteries in the past 20 years.

The traditional lithium-ion battery electrode plate design is uniform in thickness, width and length to ensure N/P and capacity, and this type of design has remained unchanged for nearly 30 years. With higher requirements on battery cell energy density, cycle life and cost, most researchers focus on improving the materials themselves, however, the reality is that materials often cannot take into account energy density, cycle life and cost at the same time. If starting from the intrinsic characteristics of porous electrodes, analyzing the requirements for material properties in different areas of the electrode plate in three-dimensional space, and using materials with corresponding properties for different spatial positions, it will be possible to design more competitive products.

CN112736217A discloses a lithium battery negative electrode plate, a wound battery cell and a lithium-ion battery, wherein the negative electrode plate comprises a negative electrode current collector and a functional layer coated on at least one surface of the negative electrode current collector, the negative electrode tab is provided on the first surface of the negative electrode current collector, the functional layer of the first surface includes a double-layer coating area near the negative electrode tab, the double-layer coating area includes a first negative electrode active substance layer and a second negative electrode active substance layer, the first negative electrode active substance layer is located between the surface of the negative electrode current collector and the second negative electrode active substance layer, and the solid phase diffusion coefficient of lithium in the second negative electrode active material in the second negative electrode active substance layer is greater than the solid phase diffusion coefficient of lithium in the first negative electrode active material in the first negative electrode active substance layer.

CN111628141A discloses a silicon-doped negative electrode plate and a lithium-ion battery comprising the negative electrode plate, two layers of negative electrode slurry with different silicon material mixing amounts are coated on both sides of the negative electrode current collector, and the coating of the two layers of silicon material can not only effectively increase the proportion of silicon material in the negative electrode material to achieve the purpose of increasing energy density, but also the cycle performance of the battery cell is not inferior to that of a single-layer silicon-doped negative electrode with the same proportion.

The above solution is extremely difficult in engineering manufacturing, because double coatings are prone to losing control in production coating surface density control and N/P ratio control, and the thickness of double coatings is difficult to control to the point where one coating is thinner. In the field of energy storage, the commonly used charging and discharging requirements are 0.25P/0.25P, 0.5P/0.5P and 1.0P/1.0P, and the current density at the edge is greater than the average current density. Although lithium deposition will not occur, the edge potential will still be lower, the side reactions will be more intense, and the active lithium consumption will be more serious, causing the black and purple spots on the edge to expand from near the edge to the middle area.

### Summary

The technical problem to be solved by the present invention is to provide a composite electrode plate, and a preparation method therefor and the application thereof, the present invention reduces or eliminates the phenomenon of high current density at the edge by controlling the contact resistance between the current collector and the active substance layer, thereby achieving uniform overall reaction of the active substance layer and improving the cycle life.

In order to achieve the purpose of the invention, the present invention adopts the following technical solutions:
Firstly, the present invention provides a composite electrode plate, the composite electrode plate comprises a current collector, an active substance layer, and a contact resistance regulation and control layer arranged between the current collector and the active substance layer, wherein the contact resistance regulation and control layer comprises a first contact resistance regulation and control layer, a second contact resistance regulation and control layer, a third contact resistance regulation and control layer, a fourth contact resistance regulation and control layer and a fifth contact resistance regulation and control layer, which are sequentially arranged in parallel; and materials of the first contact resistance regulation and control layer, the third contact resistance regulation and control layer and the fifth contact resistance regulation and control layer are the same, and materials of the second contact resistance regulation and control layer and the fourth contact resistance regulation and control layer are the same.

The present invention uses primer slurries with different formulations to apply primers with different conductivity on different areas of the substrate, so that existing gravure coating equipment can be directly used for mass production, and this can achieve uniform current density between the current collector and the active material coating, avoid black and purple spots on the edges caused by the current density at the edge being greater than the average current density, and ultimately improve the cycle life of the battery cell.

Preferably, a width of the current collector is denoted as H1, a width of the active substance layer is denoted as H2, a width of the first contact resistance regulation and control layer is denoted as H3, a width of the second contact resistance regulation and control layer is denoted as H4, a width of the third contact resistance regulation and control layer is denoted as H5, a width of the fourth contact resistance regulation and control layer is denoted as H6, and a width of the fifth contact resistance regulation and control layer is denoted as H7, H1>H2, H3=H7=H2×a, H5=H2×b, H4=H6=0.5×(H2-H3-H7-H5), wherein a is 0.1-15%, for example: 0.1%, 1%, 3%, 5%, 10% or 15%, etc., b is 0.1-30%, for example: 0.1%, 1%, 5%, 10%, 20% or 30%, etc..

Preferably, the contact resistance regulation and control layer comprises conductive agent, binding agent and additive.

Preferably, the conductive agent includes any one of conductive carbon black, carbon fiber, acetylene black, Ketjen black, graphene or carbon nanotube, or a combination of at least two thereof.

Preferably, the binding agent includes any one of fluorine-containing resin, polypropylene resin, polyacrylic acid, modified polyacrylic acid, fiber type adhesive, rubber type adhesive or polyimide type adhesive, or a combination of at least two thereof.

Preferably, the additive includes any one of calcium hydroxide, 1,3-butanediol, NMP, EC or PVP, or a combination of at least two thereof.

Preferably, based on 100% of a mass of the contact resistance regulation and control layer, a mass fraction of the additive is 0.1-5%.

Preferably, in the first contact resistance regulation and control layer, the third contact resistance regulation and control layer and the fifth contact resistance regulation and control layer, a mass ratio of the binding agent to the conductive agent is (0.67~9):1, for example: 0.67:1, 1:1, 3:1, 5:1 or 9:1, etc., preferably (1.5~4):1.

Preferably, a mass ratio of the binding agent to the conductive agent in the second contact resistance regulation and control layer and the fourth contact resistance regulation and control layer is (0.67~1.5):1, for example: 0.67:1, 0.7:1, 0.9:1, 1:1, 1.2:1 or 1.5:1, etc., preferably (0.9~1.1):1.

Preferably, the current collector comprises a positive current collector or a negative current collector.

Preferably, a thickness of the positive electrode collector is 8-25µm, for example: 8, 10, 15, 20 or 25, etc.

Preferably, a thickness of the negative electrode collector is 4-12µm, for example: 4µm, 5µm, 8µm, 10µm or 12µm, etc.

Secondly, the present invention provides a preparation method for preparing the composite electrode plate as described in the first aspect, the preparation method comprises following steps:
(1) mixing first binding agent, first conductive agent and first additive with solvent to obtain a first contact resistance regulation and control layer slurry, and mixing second binding agent, second conductive agent and second additive with solvent to obtain a second contact resistance regulation and control layer slurry;
(2) coating the first contact resistance regulation and control layer slurry on a surface of the current collector to obtain the first contact resistance regulation and control layer, coating the second contact resistance regulation and control layer slurry adjacent to the first contact resistance regulation and control layer on the surface of the current collector to obtain the second contact resistance regulation and control layer, coating the third contact resistance regulation and control layer slurry adjacent to the second contact resistance regulation and control layer on the surface of the current collector to obtain the third contact resistance regulation and control layer, coating the fourth contact resistance regulation and control layer slurry adjacent to the third contact resistance regulation and control layer on the surface of the current collector to obtain the fourth contact resistance regulation and control layer, coating the fifth contact resistance regulation and control layer slurry adjacent to the fourth contact resistance regulation and control layer on the surface of the current collector to obtain the fifth contact resistance regulation and control layer;
(3) mixing active material, the conductive agent and the binding agent with solvent to obtain an electrode slurry, coating the electrode slurry on a surface of the contact resistance regulation and control layer, drying and rolling to obtain the composite electrode plate.

Preferably, a coating width of the electrode slurry in step (3) is total width of the first contact resistance regulation and control layer, the second contact resistance regulation and control layer, the third contact resistance regulation and control layer, the fourth contact resistance regulation and control layer and the fifth contact resistance regulation and control layer.

Thirdly, the present invention provides a lithium-ion battery, the lithium-ion battery comprises the composite electrode plate as described in the first aspect.

Preferably, the lithium-ion battery also comprises electrolyte and diaphragm.

Preferably, a thickness of the diaphragm is 5-25µm, for example: 5µm, 10µm, 15µm, 20µm or 25µm, etc.

Preferably, a pore size of the diaphragm is 0.01-10µm, for example: 0.01µm, 0.1µm, 0.5µm, 1µm, 5µm or 10µm, etc.

Preferably, the diaphragm includes any one of polypropylene, glass fiber, polyethylene plate or non-woven fabric, or a combination of at least two thereof.

Preferably, the electrolyte comprises non-aqueous organic solvent and lithium salt.

Preferably, the non-aqueous organic solvent comprises any one of carbonate-based solvent, ether-based solvent or ketone-based solvent, or a combination of at least two thereof.

Preferably, the non-aqueous organic solvent includes any one of butylene carbonate, dimethyl carbonate, diethyl carbonate, γ-butyrolactone, 1,2-dimethoxyethane, tetrahydrofuran, 2-methyltetrahydrofuran, dimethyl sulfoxide, 1,3-dioxolane, formamide, acetonitrile, nitromethane, methyl acetate, trisphosphate, trimethoxymethane, dioxolane derivatives, sulfolane, 1,3-dimethyl-2-imidazolidinone, propylene carbonate derivatives, tetrahydrofuran derivatives, ether, methyl propionate or ethyl propionate, or a combination of at least two thereof.

Preferably, the lithium salt includes any one of LiCl, LiBr, LiI, LiClO4, LiBF4, LiPF6, LiCF3SO3, LiCF3CO2, LiAsF6, LiSbF6, LiAlCl4, CH3SO3Li or (CF3SO2)2Nli, or a combination of at least two thereof.

Compared with the prior art, the invention has the following beneficial effects:
(1) According to the present invention, the primer coating with different conductivity is coated on different areas on the current collector by using the primer coating with different formulas, so that the current density between the current collector and the active material coating is uniform, the edge black purple spots generated from the fact that the edge current density is larger than the average current density are avoided, and the cycle life of the battery core is finally prolonged.
(2) According to the present invention, through the matching use of the first contact resistance regulation and control layer and the second contact resistance regulation and control layer, compared with the situation that no primer coating is arranged or only one of the primer coatings is arranged, the comprehensive performance is optimal, and the initial capacity, the internal resistance and the circulating capacity retention rate are simultaneously considered.
(3) The initial capacity of the battery manufactured by using the composite pole piece according to the present invention can reach more than 152.0Ah, the alternating current internal resistance can reach less than 0.33mΩ, the capacity after 1000 cycles can reach more than 139.4Ah, and the capacity retention rate after 1000 cycles can reach more than 91.3%.

### Brief Description of the Drawings

The features and properties of the present invention are further described by the following embodiments and the accompanying drawings.

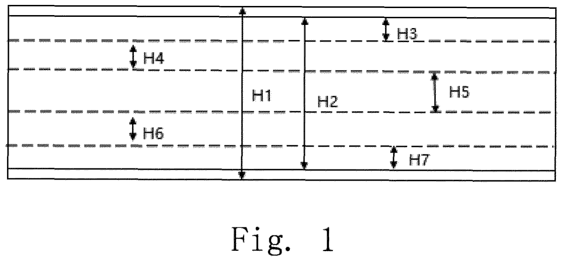

Fig. 1 is a schematic cross-sectional view of a composite positive electrode according to first embodiment of the present invention.

### Preferred Embodiment of the Present Invention

The technical scheme of the invention is further described by the following specific embodiments. It will be apparent to those skilled in the art that the embodiments are merely to aid in understanding the invention and are not to be construed as a specific limitation thereof.

In the embodiments and comparative embodiments of the present invention, the widths of the current collectors are all denoted as H1, the widths of the active substance layers are all denoted as H2, the widths of the first contact resistance regulation and control layers are all denoted as H3, the widths of the second contact resistance regulation and control layers are all denoted as H4, the widths of the third contact resistance regulation and control layers are all denoted as H5, the widths of the fourth contact resistance regulation and control layers are all denoted as H6, and the widths of the fifth contact resistance regulation and control layers are all denoted as H7, H1 > H2, H3=H7=H2×a, H5=H2×b, H4=H6=0.5× (H2-H3-H7-H5).

### First embodiment

The embodiment provides a composite positive electrode plate, and the preparation method of the composite positive electrode plate is as follows:
(1) Dispersing modified PAA, conductive carbon black and calcium hydroxide in deionized water to form a first contact resistance regulation and control layer slurry, wherein the mass ratio of the modified PAA to the conductive carbon black to the calcium hydroxide is 64:33:3, the mass ratio of a binding agent to the conductive carbon black is 1.94, and dispersing the modified PAA, the conductive carbon black and the calcium hydroxide in the deionized water to form a second contact resistance regulation and control layer slurry, wherein the mass ratio of the modified PAA to the conductive carbon black to the calcium hydroxide is 49:48:3, and the mass ratio of the binding agent to the conductive carbon black is 1.02;
(2) Coating a contact resistance regulation and control layer according to H1 of 434mm, H2 of 373mm, a of 12% and b of 24%, using a 13µm aluminum foil as a current collector, and controlling the thickness of the double sides to 2.0mm by using a gravure roll coating thickness;
(3) Dispersing LiFePO₄, conductive carbon black and polyvinylidene fluoride in N-methyl pyrrolidone to form a positive electrode active material slurry. Wherein, the weight ratio of liFePO₄ : the conductive carbon black : the polyvinylidene fluoride is 96.5:1.6:1.9, and coating the slurry on the two surfaces with the composite layer, the double-sided density of the coating after drying is 33.2 mg/cm². The composite positive electrode plate is then obtained.

The schematic cross-sectional view of the composite positive electrode is shown in Fig. 1.

### Second embodiment

The embodiment provides a composite negative electrode plate, and the preparation method of the composite negative electrode plate comprises the following steps:
(1) Dispersing modified PAA, conductive carbon black and calcium hydroxide in deionized water to form a first contact resistance regulation and control layer slurry, wherein the mass ratio of the modified PAA to the conductive carbon black to the calcium hydroxide is 64:33:3, the mass ratio of a binding agent to the conductive carbon black is 1.94, and dispersing the modified PAA, the conductive carbon black and the calcium hydroxide in the deionized water to form a second contact resistance regulation and control layer slurry, wherein the mass ratio of the modified PAA to the conductive carbon black to the calcium hydroxide is 49:48:3, and the mass ratio of the binding agent to the conductive carbon black is 1.02;
(2) Coating a contact resistance regulation and control layer in accordance with H1 of 442mm, H2 of 381mm, a of 12% and b of 24%, using 8µm copper foil as a current collector, and controlling the double-sided thickness to 2.0mm using gravure roll coating thickness;
(3) Dispersing graphite, conductive carbon black, hydroxymethyl cellulose and styrene-butadiene rubber in deionized water to form a negative electrode active material slurry. Wherein, the weight ratio of the graphite : the conductive carbon black : the hydroxymethyl cellulose to the butylbenzene rubber is 96:0.8:1.2:2; coating the slurry on the two surfaces with the composite layer, and a negative electrode active substance layer is then formed after drying, and the double-sided coating surface density after drying is 16.0 mg/cm². The composite negative electrode plate is obtained.

### Third embodiment

The present embodiment differs from the first embodiment only in that the mass ratio of the binding agent to the conductive agent in the slurry in the first contact resistance regulation and control layer in the step (1) is 1.2:1, and other conditions and parameters are identical to those in the first embodiment.

### Fourth embodiment

The present embodiment differs from the first embodiment only in that the mass ratio of the binding agent to the conductive agent in the slurry in the first contact resistance regulation and control layer in the step (1) is 5:1, and other conditions and parameters are identical to those in the first embodiment.

### Fifth embodiment

The present embodiment differs from the first embodiment only in that the mass ratio of the binding agent to the conductive agent in the second contact resistance regulation and control layer slurry in the step (1) is 0.8:1, and other conditions and parameters are identical to those in the first embodiment.

### Sixth embodiment

The present embodiment differs from the first embodiment only in that the mass ratio of the binding agent to the conductive agent in the second contact resistance regulation and control layer slurry in the step (1) is 1.2:1, and other conditions and parameters are identical to those in the first embodiment.

### Seventh embodiment

The present embodiment differs from first embodiment only in that a is 0.05% in step (2), and other conditions and parameters are identical to those in first embodiment.

### Eighth embodiment

The present embodiment differs from first embodiment only in that a is 18% in step (2), and other conditions and parameters are identical to those in first embodiment.

### Ninth embodiment

The present embodiment differs from first embodiment only in that b is 0.05% in step (2) and other conditions and parameters are identical to those in first embodiment.

### Tenth embodiment

The present embodiment differs from first embodiment only in that b is 35% in step (2) and other conditions and parameters are identical to those in first embodiment.

### First comparative embodiment

This comparative embodiment differs from first embodiment only in that the contact resistance regulation and control layer is not provided, and other conditions and parameters are identical to those in first embodiment.

### Second comparative embodiment

This comparative embodiment differs from second embodiment only in that the contact resistance regulation and control layer is not provided, and other conditions and parameters are identical to those in second embodiment.

### Third comparative embodiment

The comparative embodiment differs from first embodiment only in that same kind of slurry (second contact resistance regulation and control layer slurry) is used for the contact resistance regulation and control layers, and other conditions and parameters identical to those in first embodiment.

### First application embodiment

According to the national standard aluminum shell size 45173184 and the multi-lug winding requirement, the composite positive plate obtained in the first embodiment and the composite positive plate obtained in the second embodiment are rolled, die-cut and striped, then wound with a diaphragm, assembled into the aluminum shell and baked. LiPF₆ is dissolved in a mixed solvent of EC/PC/EMC=35:5:60 (mass ratio) at a concentration of 1 mol/L to form a non-aqueous electrolyte; injecting the electrolyte into the aluminum case in an amount of 4.2 g/Ah. Standing for 24h, performing negative pressure formation at 45°C, and then sealing under negative pressure. Finally charging to 3.65V at 1.0C, constant voltage to current of 0.05C at 3.65V, and discharging to 2.5V at 1.0C to obtain initial discharge capacity C0.

### Second application embodiment

The present application embodiment differs from first application embodiment only in that the composite positive electrode plate obtained in first embodiment is replaced with the composite positive electrode plate obtained in third embodiment, and other conditions and parameters are identical to those in first application embodiment.

### Third application embodiment

The present application embodiment differs from first application embodiment only in that the composite positive electrode plate obtained in first embodiment is replaced with the composite positive electrode plate obtained in fourth embodiment, and other conditions and parameters are identical to those in first application embodiment.

### Fourth application embodiment

The present application embodiment differs from first application embodiment only in that the composite positive electrode plate obtained in first embodiment is replaced with the composite positive electrode plate obtained in fifth embodiment, and other conditions and parameters are identical to those in first application embodiment.

### Fifth application embodiment

The present application embodiment differs from first application embodiment only in that the composite positive electrode plate obtained in first embodiment is replaced with the composite positive electrode plate obtained in sixth embodiment, and other conditions and parameters are identical to those in first application embodiment.

### Sixth application embodiment

The present application embodiment differs from first application embodiment only in that the composite positive electrode plate obtained in first embodiment is replaced with the composite positive electrode plate obtained in seventh embodiment, and other conditions and parameters are identical to those in first application embodiment.

### Seventh application embodiment

The present application embodiment differs from first application embodiment only in that the composite positive electrode plate obtained in first embodiment is replaced with the composite positive electrode plate obtained in third embodiment, and other conditions and parameters are identical to those in first application embodiment.

### Eighth application embodiment

The present application embodiment differs from first application embodiment only in that the composite positive electrode plate obtained in first embodiment is replaced with the composite positive electrode plate obtained in ninth embodiment, and other conditions and parameters are identical to those in first application embodiment.

### Ninth application embodiment

The present application embodiment differs from first application embodiment only in that the composite positive electrode plate obtained in first embodiment is replaced with the composite positive electrode plate obtained in tenth embodiment, and other conditions and parameters are identical to those in first application embodiment.

### First application comparative embodiment

The present application comparative embodiment differs from first application embodiment only in that the composite positive electrode plate obtained in first embodiment is replaced with the composite positive electrode plate obtained in first comparative embodiment, and the composite negative electrode plate obtained in second embodiment is replaced with the composite negative electrode plate obtained in second comparative embodiment, and other conditions and parameters are identical to those in first application embodiment.

### Second application comparative embodiment

The present application comparative embodiment is different from first application embodiment only in that the composite positive electrode plate obtained in first embodiment is replaced with the composite positive electrode plate obtained in third comparative embodiment, and other conditions and parameters are identical to those in first application embodiment.

### Performance test:

The batteries obtained in application embodiments 1 to 9 and application comparative embodiments 1 to 2 are subjected to a cycle test:
(1) standing for 5min;
(2) constant current charging is carried out to 3.65V at 1.0C, and constant voltage is carried out to 0.05C at 3.65V;
(3) standing for 5min;
(4) constant current discharge of 1.0C to 2.5V;
(5) standing for 5min;
(6) repeating the steps 2-5 for 1000 times, recording the 1000th discharge capacity as C1000, and the test results are shown in table 1:

**Table 1**

| Group | Ratio of binding agent and conduct ive agent in the first contact resistan ce regulati on and control layer | Ratio of binding agent and conduct ive agent in the second contact resistan ce regulati on and control layer | a | b | Initial capaci ty C0/A h | AC interna 1 resista nce /mΩ | Capacity after 1000 cyclesC100 0/Ah | Capac ity retenti on after 1000 cycles /% |
|---|---|---|---|---|---|---|---|---|
| First applicati on embodim ent | 1.94 | 1.02 | 12% | 24% | 153.4 | 0.28 | 145.1 | 94.6% |
| Second applicati on embodiment | 1.2 | 1.02 | 12% | 24% | 153.8 | 0.25 | 144.0 | 93.6% |
| Third applicati on embodim ent | 5 | 1.02 | 12% | 24% | 153.0 | 0.32 | 144.1 | 94.2% |
| Fourth applicati on embodim ent | 1.94 | 0.8 | 12% | 24% | 153.5 | 0.27 | 143.5 | 93.5% |
| Fifth applicati on embodim ent | 1.94 | 1.2 | 12% | 24% | 153.0 | 0.30 | 143.4 | 93.7% |
| Sixth applicati on embodim ent | 1.94 | 1.02 | 0.05 % | 24% | 153.6 | 0.24 | 140.7 | 91.6% |
| Seventh applicati on embodim ent | 1.94 | 1.02 | 18% | 24% | 152.0 | 0.33 | 140.1 | 92.2% |
| Eighth applicati on embodim ent | 1.94 | 1.02 | 12% | 0.05 % | 152.4 | 0.25 | 140.3 | 92.1% |
| Ninth applicati on embodim ent | 1.94 | 1.02 | 12% | 35% | 152.7 | 0.32 | 139.4 | 91.3% |
| First applicati on comparat ive embodim ent | none | none | 0.00 % | 0.00 % | 148.6 | 0.45 | 134.3 | 90.4% |
| Second applicati on comparat ive embodim ent | 1.02 | 1.02 | / | / | 153.9 | 0.27 | 137.8 | 89.5% |

As can be seen from Table 1, according to first application embodiment to ninth application embodiment, the initial capacity of the battery manufactured using the composite pole piece disclosed by the invention can be more than 152.0Ah, the alternating current internal resistance can be less than 0.33mΩ, the capacity after 1000 cycles can be more than 139.4Ah, and the capacity retention rate after 1000 cycles can be more than 91.3%.

The comparison of first application embodiment and second application embodiment and third application embodiment shows that the mass ratio of the binding agent to the conductive agent in the contact resistance regulation and control layer can affect the performance of the composite electrode, and the mass ratio of the binding agent to the conductive agent in the first contact resistance regulation and control layer, the third contact resistance regulation and control layer and the fifth contact resistance regulation and control layer is controlled to be (1.5-4): 1, the mass ratio of the binding agent to the conductive agent in the second contact resistance regulation and control layer and the fourth contact resistance regulation and control layer is controlled to be (0.9-1.1): 1 will achieve composite electrode with better performance. The mass ratio of the binding agent to the conductive agent in the first contact resistance regulation and control layer, the third contact resistance regulation and control layer and the fifth contact resistance regulation and control layer is setting too high will cause large internal resistance although the capacity retention rate is better; the mass ratio of the binding agent to the conductive agent in the first contact resistance regulation and control layer, the third contact resistance regulation and control layer and the fifth contact resistance regulation and control layer is setting too low will cause low cycle retention rate low although the internal resistance is excellent. According to comparison of the first application embodiment with the fourth to fifth application embodiments, the mass ratio of the binding agent to the conductive agent in the second contact resistance regulation and control layer and the fourth contact resistance regulation and control layer needs to be well matched to that of the first contact resistance regulation and control layer (the first contact resistance regulation and control layer, the third contact resistance regulation and control layer and the fifth contact resistance regulation and control layer are the same) so as to play a role in adjusting the current density. In the present invention, in order to take into account the internal resistance, the optimal ratio between the binding agent and the conductive agent of the second contact resistance regulation and control layer and the fourth contact resistance regulation and control layer is between 0.9 and 1.1.

By comparing first application embodiment with sixth to ninth application embodiments, the width relation of each contact resistance regulation and control layer can influence the performance of the prepared composite electrode, and to control a as 0.1-15% and b as 0.1-30% will achieve a prepared composite electrode with excellent performance; and if the width is lower than the range, the first contact resistance regulation and control layer is too small to cover the area to be regulated, so that the circulation is poor; if it is above this range, the first contact resistance regulation and control layer is setting too wide, which will result in a large internal resistance.

By comparing first application embodiment with first to second application comparative embodiments, the invention can directly use the existing gravure coating equipment to produce in large scale by using the primer with different formulas to coat the primer with different electric conductivity on different areas on the current collector, and realize uniform current density between the current collector and the active material coating, avoid edge black and purple spots caused by the fact that the current density of the edge is larger than the average current density, and finally improve the cycle life of the battery core.

The applicant declares that the above is only a specific embodiment of the present invention, but the scope of the present invention is not limited thereto, and it should be apparent to those skilled in the art that any changes or substitutions that are easily conceivable within the technical scope of the present invention disclosed by the present invention fall within the scope of the present invention and the disclosure.

## Claims

1. A composite electrode plate, **characterized in that** the composite electrode plate comprises a current collector, an active substance layer, and a contact resistance regulation and control layer arranged between the current collector and the active substance layer, wherein the contact resistance regulation and control layer comprises a first contact resistance regulation and control layer, a second contact resistance regulation and control layer, a third contact resistance regulation and control layer, a fourth contact resistance regulation and control layer and a fifth contact resistance regulation and control layer, which are sequentially arranged in parallel; and materials of the first contact resistance regulation and control layer, the third contact resistance regulation and control layer and the fifth contact resistance regulation and control layer are the same, and materials of the second contact resistance regulation and control layer and the fourth contact resistance regulation and control layer are the same.

2. The composite electrode plate according to claim 1, **characterized in that** a width of the current collector is denoted as H1, a width of the active substance layer is denoted as H2, a width of the first contact resistance regulation and control layer is denoted as H3, a width of the second contact resistance regulation and control layer is denoted as H4, a width of the third contact resistance regulation and control layer is denoted as H5, a width of the fourth contact resistance regulation and control layer is denoted as H6, and a width of the fifth contact resistance regulation and control layer is denoted as H7, H1>H2, H3=H7=H2×a, H5=H2×b, H4=H6=0.5×(H2-H3-H7-H5), wherein a is 0.1-15%, b is 0.1-30%.

3. The composite electrode plate according to claim 1 or 2, **characterized in that** the contact resistance regulation and control layer comprises conductive agent, binding agent and additive;
preferably, the conductive agent includes any one of conductive carbon black, carbon fiber, acetylene black, Ketjen black, graphene or carbon nanotube, or a combination of at least two thereof;
preferably, the binding agent includes any one of fluorine-containing resin, polypropylene resin, polyacrylic acid, modified polyacrylic acid, fiber type adhesive, rubber type adhesive or polyimide type adhesive, or a combination of at least two thereof;
preferably, the additive includes any one of calcium hydroxide, 1,3-butanediol, NMP, EC or PVP, or a combination of at least two thereof;
preferably, based on 100% of a mass of the contact resistance regulation and control layer, a mass fraction of the additive is 0.1-5%.

4. The composite electrode plate according to any one of claims 1-3, **characterized in that**, in the first contact resistance regulation and control layer, the third contact resistance regulation and control layer and the fifth contact resistance regulation and control layer, a mass ratio of the binding agent to the conductive agent is (0.67∼9):1, preferably (1.5∼4):1;
preferably, a mass ratio of the binding agent to the conductive agent in the second contact resistance regulation and control layer and the fourth contact resistance regulation and control layer is (0.67-1.5): 1, preferably (0.9~1.1):1.

5. The composite electrode plate according to any one of claims 1-4, **characterized in that** the current collector comprises a positive current collector or a negative current collector;
preferably, a thickness of the positive electrode collector is 8-25 µm;
preferably, a thickness of the negative electrode collector is 4-12µm.

6. A preparation method for preparing the composite electrode plate according to any one of claims 1-5, **characterized in that** the preparation method comprises following steps:
(1) mixing first binding agent, first conductive agent and first additive with solvent to obtain a first contact resistance regulation and control layer slurry, and mixing second binding agent, second conductive agent and second additive with solvent to obtain a second contact resistance regulation and control layer slurry;
(2) coating the first contact resistance regulation and control layer slurry on a surface of the current collector to obtain the first contact resistance regulation and control layer, coating the second contact resistance regulation and control layer slurry adjacent to the first contact resistance regulation and control layer on the surface of the current collector to obtain the second contact resistance regulation and control layer, coating the third contact resistance regulation and control layer slurry adjacent to the second contact resistance regulation and control layer on the surface of the current collector to obtain the third contact resistance regulation and control layer, coating the fourth contact resistance regulation and control layer slurry adjacent to the third contact resistance regulation and control layer on the surface of the current collector to obtain the fourth contact resistance regulation and control layer, coating the fifth contact resistance regulation and control layer slurry adjacent to the fourth contact resistance regulation and control layer on the surface of the current collector to obtain the fifth contact resistance regulation and control layer;
(3) mixing active material, the conductive agent and the binding agent with solvent to obtain an electrode slurry, coating the electrode slurry on a surface of the contact resistance regulation and control layer, drying and rolling to obtain the composite electrode plate.

7. The preparation method according to claim 6, **characterized in that** a coating width of the electrode slurry in step (3) is total width of the first contact resistance regulation and control layer, the second contact resistance regulation and control layer, the third contact resistance regulation and control layer, the fourth contact resistance regulation and control layer and the fifth contact resistance regulation and control layer.

8. A lithium-ion battery, **characterized in that** the lithium-ion battery comprises the composite electrode plate according to any one of claims 1-5.

9. The lithium-ion battery according to claim 8, **characterized in that** the lithium-ion battery also comprises electrolyte and diaphragm;
preferably, a thickness of the diaphragm is 5-25µm;
preferably, a pore size of the diaphragm is 0.01~10µm;
preferably, the diaphragm includes any one of polypropylene, glass fiber, polyethylene plate or non-woven fabric, or a combination of at least two thereof.

10. The lithium-ion battery according to claim 9, **characterized in that** the electrolyte comprises non-aqueous organic solvent and lithium salt;
preferably, the non-aqueous organic solvent comprises any one of carbonate-based solvent, ether-based solvent or ketone-based solvent, or a combination of at least two thereof;
preferably, the non-aqueous organic solvent includes any one of butylene carbonate, dimethyl carbonate, diethyl carbonate, γ-butyrolactone, 1,2-dimethoxyethane, tetrahydrofuran, 2-methyltetrahydrofuran, dimethyl sulfoxide, 1,3-dioxolane, formamide, acetonitrile, nitromethane, methyl acetate, trisphosphate, trimethoxymethane, dioxolane derivatives, sulfolane, 1,3-dimethyl-2-imidazolidinone, propylene carbonate derivatives, tetrahydrofuran derivatives, ether, methyl propionate or ethyl propionate, or a combination of at least two thereof;
preferably, the lithium salt includes any one of LiCl, LiBr, LiI, LiClO4, LiBF4, LiPF6, LiCF3SO3, LiCF3CO2, LiAsF6, LiSbF6, LiAlCl4, CH3SO3Li or (CF3SO2)2Nli, or a combination of at least two thereof.
